# EUROPÄISCHE PATENTSCHRIFT

(11) **EP 3 589 802 B1**
(45) Veröffentlichungstag und Bekanntmachung des Hinweises auf die Patenterteilung: **17.07.2024**
(21) Anmeldenummer: 18712514.1
(22) Anmeldetag: 02.03.2018
(51) Int. Cl.: E04G 21/04, B66C 23/78

(54) **TRAGSTRUKTUR MIT INTEGRIERTEM KESSEL FÜR EINE MOBILE BETONPUMPE UND MOBILE BETONPUMPE**
SUPPORT STRUCTURE WITH INTEGRATED BOILER FOR A MOBILE CONCRETE PUMP AND MOBILE CONCRETE PUMP
STRUCTURE PORTEUSE COMPRENANT UNE CUVE INTÉGRÉE POUR UNE POMPE À BÉTON MOBILE ET POMPE À BÉTON MOBILE

(30) Priorität: 02.03.2017 EP 17158812
(43) Veröffentlichungstag der Anmeldung: 08.01.2020
(73) Patentinhaber: Putzmeister Engineering GmbH, 72631 Aichtal (DE)
(72) Erfinder: BENZ, Andreas, 73240 Wendlingen (DE); FLÜGEL, Dietmar, 72649 Wolfschlugen (DE)
(74) Vertreter: Glawe, Delfs, Moll
(86) Internationale Anmeldenummer: PCT/EP2018/055209
(87) Internationale Veröffentlichungsnummer: WO 2018/158443

(56) Entgegenhaltungen:
- EP-A1- 1 418 151
- EP-A1- 1 418 151
- EP-B1- 1 418 151
- WO-A1-2015/198089
- WO-A1-2015/198089
- CN-A- 102 108 789
- CN-A- 102 108 789
- CN-A- 103 147 574
- CN-A- 103 147 574
- CN-U- 202 358 069
- CN-U- 202 358 069
- JP-A- H02 232 467
- JP-A- H02 232 467

## Beschreibung

Die Erfindung betrifft eine Tragstruktur für eine mobile Betonpumpe sowie eine mobile Betonpumpe mit entsprechender Tragstruktur.

Mobile Betonpumpen verfügen regelmäßig über einen auf einem fahrbaren Unterbau - in der Regel einem LKW-Chassis - angeordneten und gegenüber dem Unterbau verschwenkbaren Ausleger mit einer daran entlanggeführten Förderleitung, durch die fließfähiger Beton mit Hilfe einer am Unterbau angeordneten Betonpumpe gefördert werden kann. Der Ausleger umfasst dabei über mehrere Auslegerarme, die um Achsen jeweils quer zur Längsrichtung des Auslegerarms relativ zueinander verschwenkt werden können.

Um die Stabilität der Betonpumpe bei Verwendung zu gewährleisten, ist der Ausleger über eine Tragstruktur mit dem LKW-Chassis verbunden. Die Tragstruktur umfasst dabei Stützbeine, mit denen sie so auf dem Untergrund abgestützt werden kann, dass die durch den Auslegerarm verursachte Lastmomente ausschließlich über die Stützbeine, nicht aber über das LKW-Chassis in den Untergrund eingeleitet werden.

Für mobile Betonpumpen sind Tragstrukturen mit - in Fahrrichtung des LKW-Chassis gesehen - zwei vorderen teleskopierbaren Stützbeinen und zwei hinteren schwenkbaren Stützbeinen bekannt. Die vorderen Stützbeine sind dabei in sich in Draufsicht x-förmig kreuzenden Stützbeinkästen der Tragstruktur angeordnet, an der auch die hinteren Stützbeine schwenkbar angebunden sind. Mobile Betonpumpen dieser Art sind aus den Dokumenten JP H02232467A und CN 202358069U bekannt.

Der Ausleger ist über einen sogenannten Kessel an die Tragstruktur angebunden. Der Kessel umfasst dabei einen Hohlkörper mit einem an dessen Oberseite angeordnetem Lager zur drehbaren Anbindung des Auslegers. Der Kessel ist dabei in Fahrrichtung des LKW-Chassis vor dem Kreuzungspunkt der Stützbeinkästen angeordnet und in der Regel unmittelbar mit den Stützbeinkästen verbunden.

Die Verbindung des Kessels mit der übrigen Tragstruktur erfolgt in der Regel durch Fügen, insbesondere durch Schweißen. Aufgrund der hohen Belastung durch den Ausleger, die über die Schweißnähte abgeleitet werden müssen, sind diese Schweißnähte besonders sorgfältig auszuführen und zu prüfen, was ihre Herstellung aufwendig und teuer macht. Dies gilt auch für die Schweißnähte an evtl. vorgesehenen Stütz- oder Verstärkungsrippen.

In der WO 2014/029552 ist eine Tragstruktur für eine mobile Betonpumpe beschrieben, bei welcher der Kessel einen Mehrkantumriss aufweist und eine daran angepasste Mehrkantöffnung in der Tragstruktur eingepasst ist. Teile des Kessels können dabei fluchtend mit einer Seitenwand eines Stützbeinkastens angeordnet sein und diese abschnittsweise ersetzen. Auch wenn die Krafteinleitung in die Tragstruktur bei einem Kessel gemäß WO 2014/029552 gegenüber dem sonstigen Stand der Technik bereits verbessert ist, müssen die für die unmittelbare Anbindung des Kessels an die Tragstruktur erforderlichen wenigstens vier Schweißnähte weiterhin besonders belastungsfest ausgestaltet sein. Auch Schweißnähte für evtl. vorgesehenen Stütz- oder Verstärkungsrippen sind stark beansprucht.

Aufgabe der vorliegenden Erfindung ist es, eine gegenüber dem Stand der Technik verbesserte Tragstruktur für eine mobile Betonpumpe sowie eine mobile Betonpumpe zu schaffen.

Gelöst wird diese Aufgabe durch eine Tragstruktur gemäß dem Hauptanspruch sowie eine Betonpumpe gemäß dem nebengeordneten Anspruch 9. Vorteilhafte Weiterbildungen sind Gegenstand der abhängigen Ansprüche.

Zunächst werden einige in Zusammenhang mit der Erfindung verwendete Begriffe erläutert:
Der gesamte Bereich einer Seitenwand eines Stützbeinkastens, in dem die Seitenwand einen Teil der Bewandung des Kessels bildet, wird im Rahmen der Erfindung als erster Bereich der Seitenwand bezeichnet.

Ein Bauteil oder ein Bereich eines Bauteils gilt dann als "fügestellenfrei", wenn das Bauteil als Ganzes oder zumindest in dem fraglichen Bereich nicht aus mehreren, zuvor getrennten und nur durch Fügestellen verbundenen Werkstücken besteht. Ist ein erstes Bauteil über Fügestellen mit einem weiteren Bauteil verbunden, wird das erste Bauteil unter den genannten Voraussetzungen hingegen weiterhin als fügestellenfrei im Sinne der Erfindung angesehen.

Ein Bauteil gilt als "derart frei von Fügestellen, sodass bei vorgegebener Belastung keine Scherbelastung an Fügestellen des Bauteils auftritt", wenn bei einer vorgegebenen Belastung der Kraftfluss durch das Bauteil evtl. vorgesehene Fügestellen im Wesentlichen nur orthogonal kreuzt und also keine Belastung in Scherungsrichtung an den Fügestellen auftritt.

Beispielsweise kann eine Belastung des Kessels während des Betriebs der Betonpumpe einen Kraftfluss erzeugen, welcher zu großen Teilen in vertikaler Richtung verläuft. Der erste Bereich einer Seitenwand eines Stützbeinkastens ist in diesem Fall frei von Fügestellen, welche im Wesentlichen parallel zur Vertikalen verlaufen und weist bevorzugt lediglich im Wesentlichen horizontal verlaufende Fügestellen auf, welche orthogonal vom Kraftfluss geschnitten werden. Je nach Bauart der Tragstruktur können im Betrieb auch Kraftflüsse auftreten, welche in andere Richtungen weisen.

Wenn im Rahmen der Erfindung ein Teil der Bewandung des Kessels durch eine Seitenwand eines Stützbeinkastens gebildet ist, bedeutet dies, dass die Seitenwand unmittelbar einen Teil der Bewandung des Kessels bildet. Die Form der Seitenwand ist dabei so ausgebildet, dass sie die Form des entsprechenden Teils der Bewandung des Kessels nachbildet. Indem erfindungsgemäß je ein Teil der Bewandung des Kessels durch eine Seitenwand der einander kreuzenden Stützbeinkästen gebildet wird, tragen beide sich kreuzenden Stützbeinkästen mit ihrem jeweiligen ersten Bereich zur Komplettierung der Bewandung des Kessels bei. Dadurch wird zusammen mit den ersten Bereichen der jeweiligen Stützbeinkästen ein vollständiger Kessel gebildet, dessen Form zur Weiterleitung der Belastungen vom Ausleger in die Stützbeinkästen optimiert ist.

Die beiden ersten Bereiche der Seitenwände erstrecken sich jeweils bevorzugt bis zu der Öffnung des Kessels, an der das Drehlager zum Verschwenken des Verteilermastes angeordnet ist. Auf diese Weise können die Belastungen vom Verteilermast unmittelbar in die jeweiligen ersten Bereiche der Seitenwände und von dort aus unmittelbar in die Stützbeinkästen abgeleitet werden.

Indem ein Teil der Bewandung des Kessels unmittelbar durch je eine Seitenwand der Stützbeinkästen gebildet wird, wird zumindest ein Teil der durch den Verteilermast auf den Kessel eingetragenen Belastung unmittelbar - d.h. insbesondere nicht über scherbelastete Fügestellen - in die Seitenwände eingeleitet. Dabei sind die Seitenwände erfindungsgemäß derart fügestellenfrei, dass der in eine Seitenwand unmittelbar eingeleitete Teil der Belastungen sich über denjenigen ersten Bereich der Seitenwand, der unmittelbar einen Teil der Kesselbewandung bilden, hinaus in der Seitenwand und somit in die Stützbeinkästen verteilt wird, wobei keinerlei Fügestelle - bspw. eine Schweißnaht - in der Seitenwand selbst vorgesehen wäre, die aufgrund der Belastung durch den Verteilermast auf Scherung beansprucht werden würde. In der typischen Einbausituation einer Tragstruktur bedeutet dies, dass in dem genannten Bereich der Seitenwände insbesondere keine vertikalen Fügestellen vorgesehen sind. Die Krafteinleitung in die fraglichen Seitenwände der Stützbeinkästen und damit in die Stützbeinkästen insgesamt, ist deshalb vorteilhaft, wobei die genannten Seitenwände selbstverständlich über Fügestellen mit den übrigen Wänden der Stützbeinkästen oder sonstigen Bauteilen verbunden sein können.

Gegenüber dem Stand der Technik mit einer durchgehenden Kesselbewandung muss bei der erfindungsgemäßen Lösung also insbesondere nicht der gesamte wirkende Kraftfluss über eine oder mehrere stark auf Scherung beanspruchte Schweißnähte, mit denen der Kessel an die Tragstruktur angebunden ist, in die Tragstruktur übertragen werden. Vielmehr wird erfindungsgemäß ein Teil der Belastung bereits unmittelbar über die Seitenwände der Stützbeinkästen in die Tragstruktur eingeleitet. Der von den Teilen des Kessels, die nicht unmittelbar durch die Seitenwände der Stützbeinkästen gebildet sind, in die Tragstruktur zu übertragende Kraftfluss stellt demnach ebenfalls nur ein Teil der gesamten Belastung dar. Sämtliche in diesem Pfad des Kraftflusses angeordnete Fügestellen, wie bspw. Schweißnähte, sind demzufolge auch nur geringer belastet als die Schweißnähte im Stand der Technik und können in der Folge kostengünstiger ausgeführt werden.

Es ist bevorzugt, wenn die Seitenwände der Stützbeinkästen vollständig frei von Fügestellen sind, die durch die über den Kessel unmittelbar in die Seitenwände eingeleitete Belastungen auf Scherung belastet werden. In anderen Worten soll in den Seitenwände nicht nur unmittelbar in dem Bereich, in denen sie Teil der Kesselbewandung bilden, sondern insgesamt auf solche Fügestellen verzichtet werden, die durch die Belastung, die über den Bereich der einen Teil der Bewandung des Kessels in die Seitenwand eingebracht werden, auf Scherung belastet werden würden.

Vorzugsweise sind die beiden jeweils Teile der Bewandung des Kessels bildenden Seitenwände der Stützbeinkästen über eine gemeinsame Stoßkante unmittelbar miteinander verbunden. Die Seitenwände der Stützbeinkästen sind also derart geformt, dass sie bei zusammengesetzter Tragstruktur im Bereich der Kesselbewandung aneinanderstoßen, womit u.a. auch die Bewandung des Kessels in diesem Bereich geschlossen wird. Um die Tragfähigkeit und Steifigkeit der Tragstruktur insgesamt zu erhöhen, ist es dabei vorteilhaft, die beiden Seitenwände an eben dieser Stoßkante miteinander zu verbinden, bspw. durch Fügen bzw. Schweißen. Die so entstehende Fügestelle verbindet die beiden Seitenwände, die selbst aber weiterhin in den erfindungsgemäß vorgesehenen Bereichen fügestellenfrei bleiben.

Alternativ ist es möglich, dass zwischen den beiden Seitenwänden ein Übergangsblech vorgesehen ist, der einen Teil der Bewandung des Kessels bildet. Das Übergangsblech kann durch Fügen mit den beiden Seitenwänden verbunden werden, um die Steifigkeit der Tragstruktur weiter zu verbessern. Die Seitenwände bleiben dabei jedoch weiterhin frei von auf Scherung belastete Fügestellen im Sinne der Erfindung.

Erfindungsgemäß erstreckt sich wenigstens eine Seitenwand (und vorzugsweise beide Seitenwände) über den jeweiligen Stützbeinkasten hinaus fügestellenfrei bis zur Aufnahme des Kessels für das Drehlager. Befindet sich die Aufnahme des Kessels für das Drehlager oberhalb der Stützbeinkästen, ragen die Seitenwände erfindungsgemäß über die jeweiligen Stützbeinkästen hinaus bis zur Aufnahme für das Drehlager. Ist dieser über die Stützbeinkästen ragende Teil der Seitenwände vollständig fügestellenfrei, erhöht dies die Stabilität der Tragstruktur.

Dabei ist bevorzugt, wenn die Formgebung der über den Stützbeinkasten hinaus erstreckenden Teile der Seitenwände eine möglichst geringe Kerbwirkung aufweist. Die fraglichen Teile der Seitenwände sollen also derart geformt sein, dass ungünstig hohe Spannungsspitzen in den Seitenwänden, die zu deren Beschädigungen führen könnten, durch geeignete Formgebung möglichst vermieden werden.

Vorzugsweise ist die Wandung des Kessels in den Bereichen, abseits der durch die Seitenwände der Stützbeinkästen gebildeten Bereiche, durch ein einstückiges ein- oder mehrfach gekantetes oder gerundetes Blech gebildet ist, wobei das Blech vorzugsweise durch Schweißen mit den Stützbeinkästen verbunden ist. Indem der Kessel abseits der Seitenwände durch ein einstückiges Blech gebildet ist, kann die Anzahl der auf Scherung belasteten Fügestellen im Bereich des Kessels auf ein Minimum reduziert werden. Die Verbindungen zwischen dem genannten Blech und den Seitenwänden können grundsätzlich durch beliebige Fügeverfahren hergestellt werden, bevorzugt ist jedoch eine Schweißverbindung.

Die Aufnahme für ein Drehlager als, vorzugsweise vollständig umlaufender Lagerflansch ausgebildet ist, der vorzugsweise auf der Bewandung des Kessels aufliegt und mit diesem weiter vorzugsweise verschweißt ist. Indem die Aufnahme als umlaufender Lagerflansch ausgebildet ist, ist eine vorteilhafte Krafteinleitung in den Kessel bzw. deren Bewandung gewährleistet. Die Schweißnaht zwischen der Aufnahme für das Drehlager und der Bewandung des Kessels ist dabei regelmäßig nicht auf Scherung belastet.

Zur Erläuterung der erfindungsgemäßen Betonpumpe wird auf die vorstehenden Ausführungen verwiesen.

Die Erfindung wird nun anhand vorteilhafter Ausführungsformen unter Bezugnahme auf die beigefügten Zeichnungen beispielhaft beschrieben. Es zeigen:
- Figur 1:: eine Seitenansicht eines ersten Ausführungsbeispiels einer erfindungsgemäßen Betonpumpe mit erfindungsgemäßer Tragstruktur;
- Figur 2:: eine Draufsicht der Betonpumpe aus Figur 1 ohne Verteilermast;
- Figur 3:: eine Explosionsdarstellung der Tragstruktur der Betonpumpe gemäß Figuren 1 und 2;
- Figur 4a, b:: Detaildarstellungen der Tragstruktur aus Figur 3;
- Figur 5:: eine erste Ausführungsvariante der Tragstruktur gemäß Figuren 3 und 4; und
- Figur 6:: eine zweite Ausführungsvariante der Tragstruktur gemäß Figuren 3 und 4.

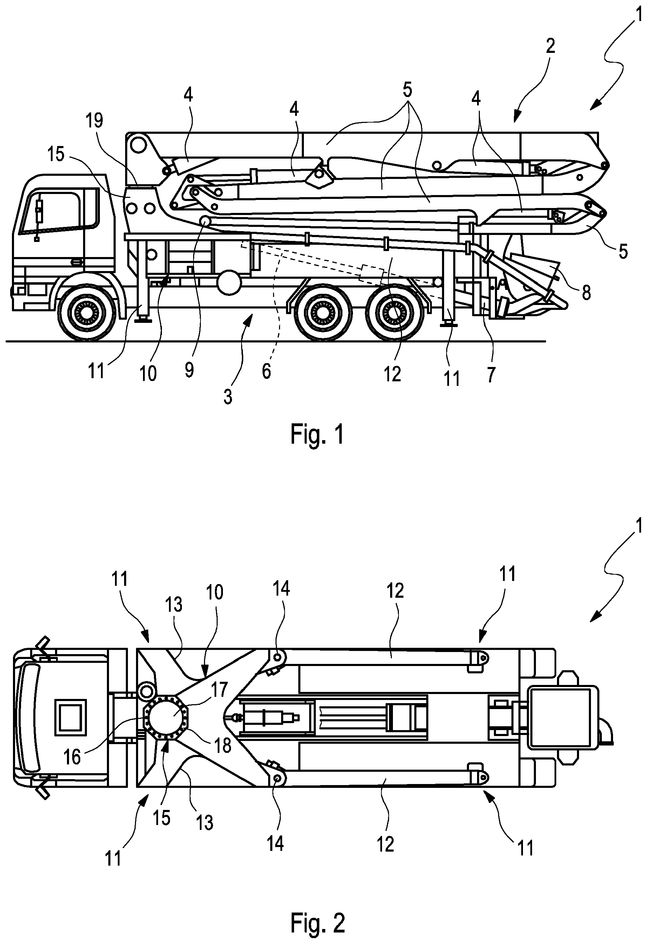

Bei der in Figuren 1 und 2 dargestellten mobilen Betonpumpe 1 mit Verteilermast 2 ist der Verteilermast 2 (nur in Figur 1 dargestellt) drehbar auf einem fahrbaren Unterbau 3 befestigt ist. Der Verteilermast 2 umfasst mehrere, durch Hydraulikzylinder 4 ausklappbare Teile 5, in denen eine (nur teilweise dargestellte) Förderleitung 6 für fließfähigen Beton geführt ist. Mit Hilfe einer am Unterbau 3 angeordneten Betonpumpe 7 kann fließfähiger Beton vom Aufgabetrichter 8 durch die Förderleitung 6 mit zum freien offenen Ende 9 der Förderleitung 6 gefördert werden.

Um die Stabilität der Betonpumpe 1 bei ihrer Verwendung - und damit insbesondere dem Ausfahren und/oder Verschwenken des Verteilermastes 2 - zu gewährleisten, ist der Verteilermast 2 über eine Tragstruktur 10 mit dem Unterbau verbunden. An der Tragstruktur 10 sind insgesamt vier Stützbeine 11 vorgesehen, von denen sich die beiden vorderen Stützbeine 11 teleskopartig ausstellen lassen und sich die beiden hinteren Stützbeine 11 über Auslegerarme 12 seitlich ausschwenken lassen. Die Tragstruktur 10 weist dazu zwei sich diagonal einander kreuzende Stützbeinkästen 13, in denen die Teleskoprohre für die vorderen Stützbeine 11 angeordnet sind, sowie Lagerpunkte 14 für die Auslegerarme 12 auf.

Zur drehbaren Anbindung des Verteilermastes 2 an dem Unterbau 3 ist ein Mastbock 15 vorgesehen, der an der Tragstruktur 10 befestigt ist. Der Mastbock 15 umfasst einen Kessel 16 mit Öffnung 17, durch den die Förderleitung 6 von der Betonpumpe 7 zum Verteilermast 2 geführt wird. An dem einen Ende der Öffnung 17 weist der Kessel 16 eine Aufnahme 18 für ein Drehlager 19 auf, mit dem der Verteilermast 2 letztendlich gegenüber dem Unterbau 3 verschwenkt werden kann.

Indem der Mastbock 15 unmittelbar Teil der Tragstruktur 10 ist, ist gewährleistet, dass die durch den Verteilermast 2 eingebrachten Belastungen unmittelbar über die Tragstruktur 10 und die ausgefahrenen Stützbeine 11 in den Untergrund eingeleitet werden können, ohne dass der Unterbau 3 der Betonpumpe 1 belastet werden würde.

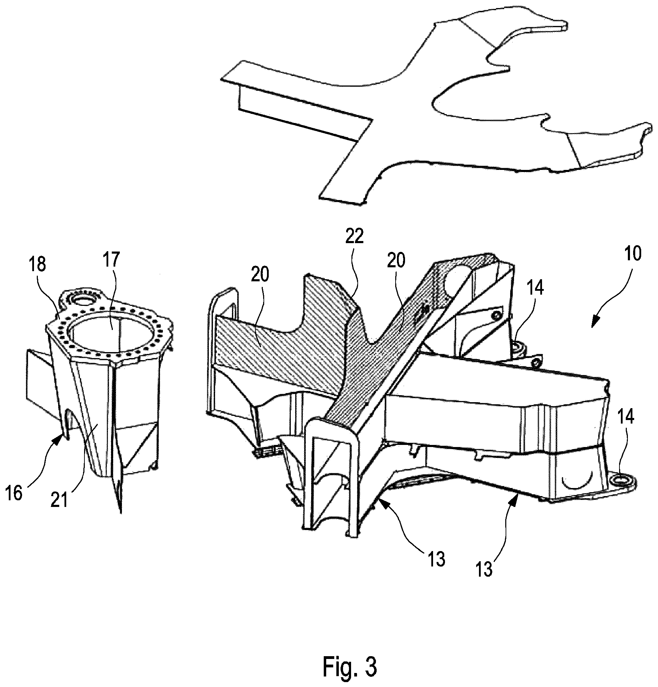

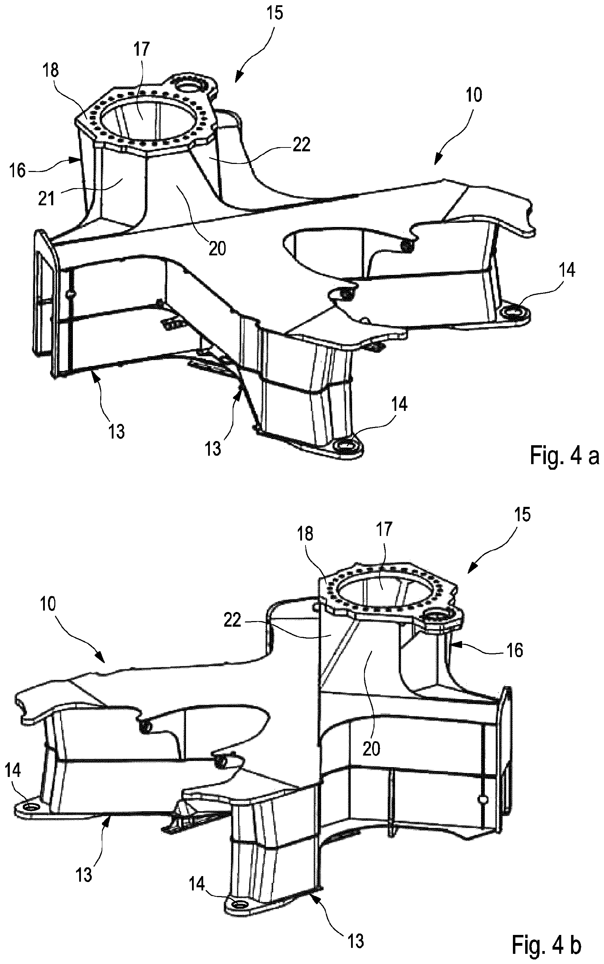

In Figuren 3 und 4a, b ist die Tragstruktur 10 der Betonpump 1 im Detail dargestellt. In Figur 3 sind zur Veranschaulichung Teile des Kessels 16 und der Stützbeinkästen 13 von den übrigen Teilen der Tragstruktur 10 beabstandet abgebildet. Figur 4a, b zeigt die Tragstruktur 10 in vollständig zusammengesetzten Zustand.

Die sich diagonal kreuzenden Stützbeinkästen 13 der Tragstruktur sind zweistöckig aufgebaut, sodass in den Stützbeinkästen 13 jeweils ein Teleskoprohr in unterschiedlichen Ebenen angeordnet werden können, damit die Teleskoprohre im Schnittpunkt der Stützbeinkästen 13 kreuzen können. Die Anbindungspunkte 14 für die Auslegerarme 12 sind unmittelbar an den Stützbeinkästen 13 angeordnet.

Die gesamte Tragstruktur 10 ist eine geschweißte Blechstruktur, d.h. die Tragstruktur 10 ist aus einer Vielzahl von Blechen, die durch Schweißnähte miteinander verbunden sind, gebildet. Dazu gehören u.a. die Seitenwänden 20 der Stützbeinkästen 13, das mehrfach gekantete Wandblech 21 des Kessels 16 und die Aufnahme 18 für das Drehlager 19, die als Lagerflansch ausgebildet ist.

Die Seitenwänden 20 der Stützbeinkästen 13 sind derart ausgebildet, dass sie im zusammengesetzten Zustand der Tragstruktur 10 einen Teil der Bewandung des Kessels 16 bilden, die durch das gekantete Wandblech 21 vervollständigt wird. Um eine gemeinsame Oberkante zu bilden, ragen die Seitenwände 20 im Bereich des Kessels 16 über die eigentlichen Stützbeinkästen 13 hinaus, wobei insbesondere dieser Teil der Seitenwände 20 derart ausgestaltet ist, dass sich eine möglichst geringe Kerbwirkung bei der zu erwartenden Belastung durch den Verteilermast 2 ergibt. Auf der Bewandung des Kessels 16 - also den fraglichen Teilen der Seitenwänden 20 und dem Wandblech 21 - ist die Aufnahme 18 befestigt, sodass die Aufnahme 18 die von der Bewandung des Kessels 16 gebildete zentrale Öffnung 17 umgibt. Die einzelnen Bauteile des Kessels 16 werden dabei durch Schweißnähte miteinander verbunden.

Die Seitenwänden 20 der Stützbeinkästen 13 sind einstückig ausgebildet und somit vollständig fügestellenfrei. Insbesondere sind keine vertikalen Fügestellen bzw. Schweißnähte innerhalb der Seitenwänden 20 vorgesehen, die durch die über die Aufnahme 18 in den Kessel 16 bzw. die Tragstruktur 10 eingebrachten Belastungen auf Scherung belastet werden würden. Die unmittelbar über die Aufnahme 18 in die Seitenwänden 20 eingeleiteten Kräfte werden so vorteilhaft über die gesamten Seitenwänden 20 verteilt, ohne dass dabei eine Fügestelle hochbelastet wird. Die in die übrige, durch das Wandblech 21 gebildete Wandung des Kessels 16 eingebrachte Belastungen werden über die Verbindungsschweißnähte in den Seitenwänden 20 eingebracht, können aber ebenfalls über die gesamten Seitenwänden verteilte werden.

Die beiden Seitenwände 20 stoßen im Bereich der Seitenkästen 13 unmittelbar aneinander und sind dort miteinander verschweißt. Oberhalb der Stützbeinkästen 13 ist zwischen den beiden Seitenwänden 20 ein Übergangsblech 22 vorgesehen, auf dem letztendlich ein Teil der Aufnahme 18 zum Liegen kommt. Das Übergangsblech 22 ist an beiden Seitenwänden 20 durch eine Schweißnaht befestigt.

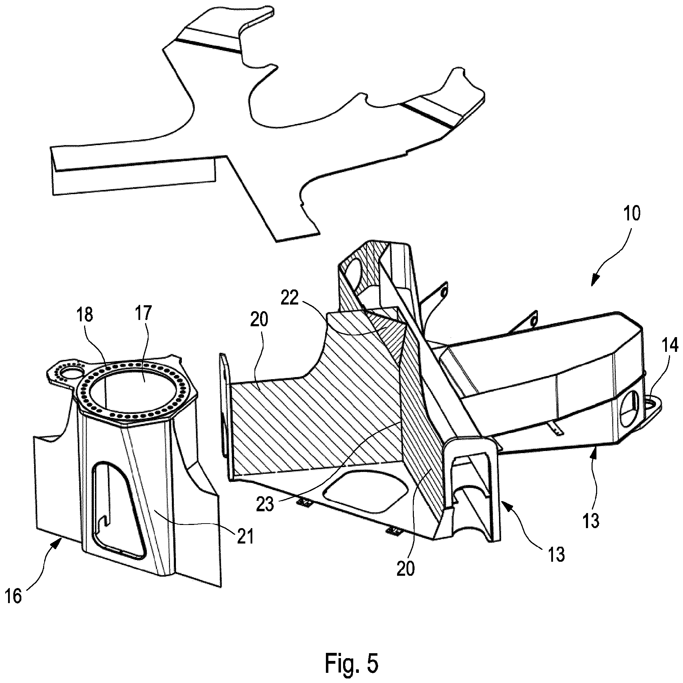

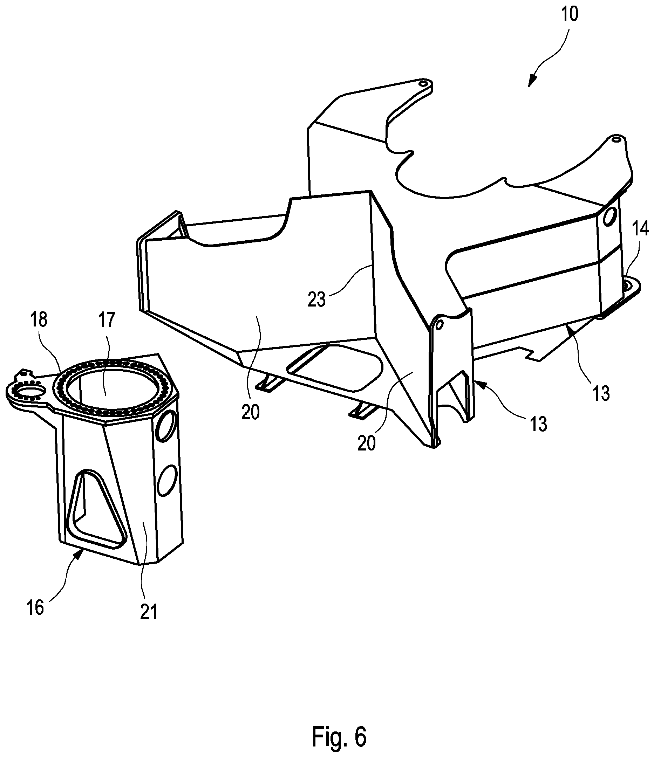

In Figuren 5 und 6 sind Ausführungsvarianten der Tragstruktur 10 aus Figuren 3 und 4a, b gezeigt. Dabei gleichen die Tragstrukturen 10 in weiten Teilen der vorstehend beschriebenen Struktur, weshalb im Folgenden lediglich auf die Unterschiede zu der in Figuren 3 und 4a, b dargestellten Tragstruktur 10 eingegangen wird. Im Übrigen gelten die Ausführungen zu den Figuren 1 bis 4 analog.

Bei der Ausführungsvariante gemäß Figur 5 haben die Seitenwände 20 bis hin zur Aufnahme 18 eine gemeinsame Stoßkante 23, an der sie auch miteinander verschweißt sind. Dennoch ist das Übergangsblech 22 als zusätzliche Versteifung vorgesehen.

In der Ausführungsvariante gemäß Figur 6 reicht die gemeinsame Stoßkante 23 der Seitenwände 20 ebenfalls bis zu Aufnahme 18. Ein Übergangsblech 22 ist hingegen nicht vorgesehen, da die übrige Konstruktion der Tragstruktur bereits ausreichend stabil und steif ist. Die Aufnahme 18 für das Drehlager 19 ist derart ausgebildet, dass es über den gesamten Umfang auf den Seitenwänden 20 oder dem Wandblech 21 aufliegt.

## Patentansprüche

1. Tragstruktur (10) für eine mobile Betonpumpe (1) zur Anbindung eines Verteilermastes (2) umfassend
einen ersten Stützbeinkasten (13) und einen zweiten Stützbeinkasten (13), wobei die Stützbeinkästen (13) einander diagonal kreuzen,
und einen daran befestigten Mastbock (15) mit einem Kessel (16), der eine Öffnung (17) aufweist, die an ihrem einen Ende wenigstens teilweise von einer Aufnahme (18) für ein Drehlager (19) zum Verschwenken des Verteilermastes (2) der Betonpumpe (1) gegenüber dem Kessel (16) umgeben ist, wobei der Kessel (16) eine Bewandung aufweist, wobei je ein Teil der Bewandung durch eine Seitenwand (20) der einander kreuzenden Stützbeinkästen (13) gebildet ist, **dadurch gekennzeichnet, dass** die Seitenwände (20) der Stützbeinkästen (13) in einem ersten Bereich, in dem sie einen Teil der Bewandung des Kessels (16) bilden, einstückig ausgebildet sind und somit derart frei von Fügestellen sind, dass über den Kessel (16) unmittelbar in die Seitenwände (20) eingeleitete Belastungen über den ersten Bereich hinaus ohne Scherbelastung einer Fügestelle in den Seitenwänden (20) verteilt werden, wobei sich wenigstens eine der Seitenwände (20) über den jeweiligen Stützbeinkasten (13) hinaus fügestellenfrei bis zu der Aufnahme (18) für das Drehlager (19) erstreckt.

2. Tragstruktur nach Anspruch 1,
**dadurch gekennzeichnet, dass**
die Seitenwände (20) der Stützbeinkästen (13) vollständig frei von Fügestellen sind, die durch die über den Kessel (16) unmittelbar in die Seitenwände (20) eingeleitete Belastungen auf Scherung belastet werden.

3. Tragstruktur nach Anspruch 1 oder 2,
**dadurch gekennzeichnet, dass**
die beiden jeweils Teile der Bewandung des Kessels (16) bildenden Seitenwände (20) der Stützbeinkästen (13) über eine gemeinsame Stoßkante (23) unmittelbar miteinander verbunden sind.

4. Tragstruktur nach Anspruch 1 oder 2,
**dadurch gekennzeichnet, dass**
zwischen den beiden Seitenwänden (20) ein Übergangsblech (22) vorgesehen ist, der einen Teil der Bewandung des Kessels (16) bildet.

5. Tragstruktur nach einem der vorhergehenden Ansprüche,
**dadurch gekennzeichnet, dass**
sich beide Seitenwände (20) über den jeweiligen Stützbeinkasten (13) hinaus fügestellenfrei bis zur Aufnahme (18) für das Drehlager (19) erstrecken.

6. Tragstruktur nach Anspruch 5,
**dadurch gekennzeichnet, dass**
die Formgebung der sich über den Stützbeinkasten (13) hinaus erstreckenden Teile der Seitenwände (20) eine möglichst geringe Kerbwirkung aufweist.

7. Tragstruktur nach einem der vorhergehenden Ansprüche,
**dadurch gekennzeichnet, dass**
die Bewandung des Kessels (16) in Bereichen, die abseits der durch die Seitenwände (20) der Stützbeinkästen (13) gebildeten Teile angeordnet sind, durch ein einstückiges ein- oder mehrfach gekantetes oder gerundetes Blech (21) gebildet ist, wobei das Blech (21) vorzugsweise durch Schweißen mit den Stützbeinkästen (13) verbunden ist.

8. Tragstruktur nach einem der vorhergehenden Ansprüche,
**dadurch gekennzeichnet, dass**
die Aufnahme (18) für ein Drehlager (19) als vorzugsweise vollständig umlaufender Lagerflansch ausgebildet ist, der vorzugsweise auf der Bewandung des Kessels (16) aufliegt und mit diesem weiter vorzugsweise verschweißt ist.

9. Mobile Betonpumpe (1) umfassend einer auf einem fahrbaren Unterbau (3) befestigten Tragstruktur (10) mit an der Tragstruktur angeordneten ausfahrbare Stützbeine (11) zum Abstützen der Betonpumpe (1) auf dem Boden und einem drehbar an der Tragstruktur (10) gelagerten Verteilermast (3), **dadurch gekennzeichnet, dass**
die Tragstruktur (10) nach einem der vorhergehenden Ansprüche ausgestaltet ist.

## Claims

1. Supporting structure (10) for a mobile concrete pump (1) for the connection of a distributor boom (2), comprising
a first support leg box (13) and a second support leg box (13), wherein the support leg boxes (13) cross one another diagonally,
and a boom pedestal (15) which is fastened to said support leg boxes (13) and has a turret (16) which has an opening (17) which, at one end thereof, is at least partially surrounded by a mount (18) for a rotary bearing (19) for the pivoting of the distributor boom (2) of the concrete pump (1) relative to the turret (16), wherein the turret (16) has a wall arrangement, wherein in each case one part of the wall arrangement is formed by a side wall (20) of the support leg boxes (13) which cross one another, **characterized in that** the side walls (20) of the support leg boxes (13), in a first region in which they form a part of the wall arrangement of the turret (16), are configured in a single piece and are thus free from joining points in such a manner that loads introduced via the turret (16) directly into the side walls (20) are distributed beyond the first region without shear loading of a joining point in the side walls (20), wherein at least one of the side walls (20) extends in a manner free from joining points beyond the respective support leg box (13) to the mount (18) for the rotary bearing (19).

2. Supporting structure according to Claim 1, **characterized in that**
the side walls (20) of the support leg boxes (13) are entirely free from joining points that are subjected to shear loading by the loads that are introduced via the turret (16) directly into the side walls (20).

3. Supporting structure according to Claim 1 or 2, **characterized in that**
the two side walls (20), which each form parts of the wall arrangement of the turret (16), of the support leg boxes (13) are directly connected to one another by means of a common abutting edge (23).

4. Supporting structure according to Claim 1 or 2, **characterized in that**
a transition plate (22) which forms a part of the wall arrangement of the turret (16) is provided between the two side walls (20).

5. Supporting structure according to one of the preceding claims,
**characterized in that**
both side walls (20) extend in a manner free from joining points beyond the respective support leg box (13) to the mount (18) for the rotary bearing (19).

6. Supporting structure according to Claim 5, **characterized in that**
the shaping of those parts of the side walls (20) which extend beyond the support leg box (13) has the least possible notch effect.

7. Supporting structure according to one of the preceding claims,
**characterized in that**
the wall arrangement of the turret (16) is, in regions arranged outside the parts formed by the side walls (20) of the support leg boxes (13), formed by a single-piece, singly or multiply angled or radiussed plate (21), wherein the plate (21) is preferably connected by welding to the support leg boxes (13).

8. Supporting structure according to one of the preceding claims,
**characterized in that**
the mount (18) for a rotary bearing (19) is formed as a preferably fully encircling bearing flange, which preferably lies on the wall arrangement of the turret (16) and is furthermore preferably welded thereto.

9. Mobile concrete pump (1) comprising a supporting structure (10) which is fastened on a mobile substructure (3) and which has extendable support legs (11) which are arranged on the supporting structure and which serve for supporting the concrete pump (1) on the ground, and comprising a distributor boom (3) mounted rotatably on the supporting structure (10),
**characterized in that**
the supporting structure (10) is designed according to one of the preceding claims.

## Revendications

1. Structure porteuse (10) pour une pompe à béton mobile (1) destinée à être reliée à un mât de distribution (2), comprenant
un premier caisson de pied d'appui (13) et un deuxième caisson de pied d'appui (13), les caissons de pied d'appui (13) se croisant en diagonale,
et un support de mât (15) fixé à ceux-ci avec une cuve (16) qui présente une ouverture (17) qui est au moins partiellement entourée à l'une de ses extrémités par un logement (18) pour un palier de rotation (19) destiné à faire pivoter le mât de distribution (2) de la pompe à béton (1) par rapport à la cuve (16), la cuve (16) présentant une paroi, une partie de la paroi étant formée par une paroi latérale (20) de chacun des caissons de pied d'appui (13) qui se croisent, **caractérisée en ce que** les parois latérales (20) des caissons de pied d'appui (13), dans une première zone, dans laquelle elles forment une partie de la paroi de la cuve (16), sont réalisées d'une seule pièce et sont ainsi exemptes de points d'assemblage de telle sorte que des charges introduites directement dans les parois latérales (20) par l'intermédiaire de la cuve (16) sont réparties au-delà de la première zone sans contrainte de cisaillement d'un point d'assemblage dans les parois latérales (20), au moins l'une des parois latérales (20) s'étendant au-delà du caisson de pied d'appui (13) respectif jusqu'au logement (18) pour le palier de rotation (19) sans point d'assemblage.

2. Structure porteuse selon la revendication 1, **caractérisée en ce que** les parois latérales (20) des caissons de pied d'appui (13) sont entièrement exemptes de points d'assemblage qui sont sollicités en cisaillement par les charges introduites directement dans les parois latérales (20) par l'intermédiaire de la cuve (16) .

3. Structure porteuse selon la revendication 1 ou 2, **caractérisée en ce que** les deux parois latérales (20) des caissons de pied d'appui (13), qui forment respectivement des parties de la paroi de la cuve (16), sont directement reliées entre elles par une arête de jonction commune (23) .

4. Structure porteuse selon la revendication 1 ou 2, **caractérisée en ce qu'**une tôle de transition (22) est prévue entre les deux parois latérales (20), qui forme une partie de la paroi de la cuve (16).

5. Structure porteuse selon l'une quelconque des revendications précédentes, **caractérisée en ce que** les deux parois latérales (20) s'étendent au-delà de chaque caisson de pied d'appui (13), sans joint d'assemblage, jusqu'au logement (18) pour le palier de rotation (19).

6. Structure porteuse selon la revendication 5, **caractérisée en ce que** la forme des parties des parois latérales (20) qui s'étendent au-delà du caisson de pied d'appui (13) présente un effet d'entaille aussi faible que possible.

7. Structure porteuse selon l'une quelconque des revendications précédentes, **caractérisée en ce que** la paroi de la cuve (16), dans les zones situées à l'écart des parties formées par les parois latérales (20) des caissons de pied d'appui (13), est formée par une tôle (21) en une seule pièce, à un ou plusieurs plis ou arrondis, la tôle (21) étant de préférence reliée par soudage aux caissons de pied d'appui (13).

8. Structure porteuse selon l'une quelconque des revendications précédentes, **caractérisée en ce que** le logement (18) pour un palier de rotation (19) est réalisé sous forme de bride de palier, de préférence entièrement périphérique, qui repose de préférence sur la paroi de la cuve (16) et est en outre de préférence soudée à celle-ci .

9. Pompe à béton mobile (1) comprenant une structure porteuse (10) fixée sur un châssis déplaçable (3) avec des pieds d'appui (11) déployables agencés sur la structure porteuse pour soutenir la pompe à béton (1) sur le sol et un mât de distribution (3) monté de manière rotative sur la structure porteuse (10), **caractérisée en ce que**
la structure porteuse (10) est conçue selon l'une quelconque des revendications précédentes.
